**Europäisches Patentamt**

**European Patent Office**

**Office européen des brevets**

(19)

(11) Veröffentlichungsnummer: **0 037 006**
**B1**

(12)                       **EUROPÄISCHE PATENTSCHRIFT**

(45) Veröffentlichungstag der Patentschrift:
27.06.84

(21) Anmeldenummer: **81101986.8**

(22) Anmeldetag: **17.03.81**

(51) Int. Cl.³: **G 02 B 7/26**

(54) **Optischer Stern-Koppler mit planarem Mischerelement.**

(30) Priorität: **21.03.80 DE 3011059**

(43) Veröffentlichungstag der Anmeldung:
**07.10.81 Patentblatt 81/40**

(45) Bekanntmachung des Hinweises auf die Patenterteilung:
**27.06.84 Patentblatt 84/26**

(84) Benannte Vertragsstaaten:
**FR GB**

(56) Entgegenhaltungen:
**FR - A - 2 366 588**
**FR - A - 2 385 111**

**MELDUNGEN DES "OPTICAL COMMUNICATION
CONFERENCE", 17-19 September 1979, Amsterdam, NL
G.L. TANGONAN et al. "Planar multimode devices for
fiber optics" Seiten 21.5-1 bis 21.5-7
IEEE JOURNAL OF QUANTUM ELECTRONICS vol.
QE-13, no. 9, September 1977, New York, US A.F.
MILTON et al. "Star and access couplers for
multichannel fiber cables" Seite 21D
APPLIED OPTICS, vol. 19, no. 15, August 1980, New
York, US M. STOCKMANN et al. "Planar star coupler for
multimode fibers" Seiten 2584-2588**

(73) Patentinhaber: **SIEMENS AKTIENGESELLSCHAFT,
Berlin und München Wittelsbacherplatz 2,
D-8000 München 2 (DE)**

(72) Erfinder: **Witte, Hans-Hermann, Dr., Hippelstrasse 15,
D-8000 München 82 (DE)**

# Beschreibung

Die Erfindung betrifft einen optischen Stern-Koppler für Multimode-Lichtleitfasern, bei dem zwei Bündel von Lichtleitfasern über ein aus einem planaren Wellenleiter bestehendes Mischerelement miteinander verbunden sind, nach dem Oberbegriff des Anspruchs 1.

Derartige optische Stern-Koppler haben im Vergleich zu dreidimensionalen Ausführungen geringe Einfügeverluste. Sie eignen sich daher besonders für den Einsatz in der optischen Nachrichtentechnik, besonders in Datenbussen, in denen aufgrund großer Entfernungen zwischen den Teilnehmern und/oder vieler am Informationsaustausch einbezogener Teilnehmer hohe Streckendämpfungen auftreten. Der planare Wellenleiter als Mischerelement gewährleistet eine gute Mischung aller Moden und damit eine möglichst gleichmäßige Lichtverteilung an irgendeiner festen Ausgangsfaser gegenüber allen Eingangsfasern. Die Ein- bzw. Ausgangsfasern des optischen Stern-Kopplers werden an die Systemfasern, beispielsweise in einem Datenbus, angeschlossen.

Aus den Meldungen des »Optical Communication Conference«, 17/19, Sept. 1979, Amsterdam, NL, G. L. Tangonan et als »Planar Multimode Devices for Fiber Optics«, Seiten 21.5-1 bis 21.5-7 sind planare optische Koppler für Multimode-Lichtleitfasern, bei denen zwei Bündel von Systemfasern über einen planaren optischen Koppler miteinander verbunden sind, bekannt. Dieser planare optische Koppler weist in seiner Mitte einen rechteckigen planaren Mischerbereich auf. Von diesem in der Mitte des optischen Kopplers gelegenen planaren Mischerbereich gehen nach zwei Seiten kanalförmige Wellenleiter aus, die zum Koppeln von Licht zwischen den beiden Systemfaserbündeln und dem planaren Mischerbereich dienen. Sowohl der planare Mischerbereich als auch die kanalförmigen Wellenleiter sind mit Hilfe von Ionenaustausch auf der Oberfläche einer Glasplatte hergestellt. Die planaren Wellenleiter sind dabei 100 µm tief. Die verwendeten Systemfasern weisen einen Kerndurchmesser von 65 µm auf. Wie diese Autoren selbst vermerken, ist die optische Kopplung zwischen den Systemfasern und den Kanalwellenleitern ein Problem. Als bestes Ergebnis geben diese Autoren bei Verwendung von Gradientensystemfasern einen Kopplungsgrad von 35% von Systemfaser über Kanalwellenleiter zu Systemfaser an. Bei einem optischen Koppler nach dieser Veröffentlichung kann auch kein Stecker zum Verbinden der Systemfasern mit dem Sternkoppler verwendet werden. Außerdem wird eine besondere Vorrichtung benötigt, um die Systemfasern auf die Höhe der Kanalwellenleiter anzuheben. Das umständliche Herstellungsverfahren eines solchen optischen Kopplers, bei dem Kanten nicht genügend sauber definiert werden können, die großen optischen Koppelverluste und die umständliche Handhabung eines optischen Kopplers nach dieser Veröffentlichung stehen einer Massenproduktion im Wege.

Aus IEEE Journ. of Quantum Electronics, Vol. QE-13, No. 9, Sept. 1977, New York, US, von A. F. Milton et al »Star and Access Couplers for Multichannel Fiber Cables«, Seite 21 D ist ein optischer Stern-Koppler für Multimode-Lichtleitfasern nach dem Oberbegriff des Anspruchs 1 bekannt. Bei diesem optischen Stern-Koppler ist das Mischerplättchen dünner als der Kerndurchmesser der Elementlichtleitfasern. Daher muß dieses Mischerplättchen unterlegt werden. Dies macht die Herstellung eines solchen optischen Stern-Kopplers technisch aufwendig und stellt ein Hindernis für eine Massenproduktion dar. Bei der Auskopplung von Licht aus dem Mischerplättchen in Elementlichtleitfasern wird Licht aus dem Mischerplättchen auch in die Mäntel dieser Elementlichtleitfasern ausgekoppelt. Da bei dieser Veröffentlichung Kerndurchmesser und Außendurchmesser von Systemlichtleitfasern und Elementlichtleitfasern übereinstimmen, wird Licht, das aus dem Mischerplättchen in die Mäntel von Elementlichtleitfasern ausgekoppelt worden ist, nicht in den Kern der Systemfasern eingekoppelt und geht somit verloren. Je dicker der Mantel der Elementlichtleitfasern ist, desto gravierender sind diese Koppelverluste.

Aus der nicht vorveröffentlichten DE-A1-2 915 114 ist ein optischer Stern-Koppler für Multimode-Lichtleitfasern bekannt, bei dem die Dicke des planaren Wellenleiters gleich dem Durchmesser der Elementlichtleitfasern gemacht worden ist. Außerdem wurde dabei die Manteldicke der Elementlichtleitfasern möglichst klein gehalten. Aufgrund dieser Maßnahmen sind die Koppelverluste beim Übergang von Lichtleitfasern auf das Mischerelement und umgekehrt gering.

Der vorliegenden Erfindung liegt die Aufgabe zugrunde, einen Stern-Koppler der eingangs genannten Art anzugeben, bei dem die Koppelverluste weiter verringert sind und der einfach herzustellen ist. Darüber hinaus soll ein Verfahren zur Herstellung bestimmter Mischerelemente angegeben werden.

Diese Aufgabe wird durch einen optischen Stern-Koppler nach dem Anspruch 1 gelöst. Bei einem optischen Stern-Koppler nach dem Anspruch 1 treten beim optischen Übergang von der Systemfaser zu der Elementlichtleitfaser und weiter in den planaren Wellenleiter keine Verluste mehr auf, weil beim optischen Übergang von der Systemfaser zu der Elementlichtleitfaser das im Kern der Systemfaser geführte Licht vollständig in die Elementlichtleitfaser übergeführt wird. Da der Durchmesser dieser Elementlichtleitfaser gleich der Dicke des planaren Mischerelementes ist, und da die Elementlichtleitfaser so kurz ist, daß das in ihrem Mantel geführte Licht praktisch nicht verlorengeht, wird auch das in dieser Elementlichtleitfaser geführte Licht praktisch vollständig in das planare Mischerplättchen übergeführt. Beim optischen Übergang an diesem planaren Mischerplättchen in die abgehenden Elementlichtleitfasern und sodann in die abgehenden Systemfasern tritt lediglich beim optischen Übergang vom planaren Mischerplättchen in die Elementlichtleitfasern der Packungsdichte-Verlust auf, der für runde Elementlichtleitfasern $\pi/4 = 0,79$ (1 dB) beträgt. Das in den abgehenden Elementlichtleitfasern geführte Licht wird vollständig in den Kern der abgehenden Systemfasern übergeführt, wobei praktisch keine Verluste auftreten. Neben runden Fasern können auch solche Fasern verwendet werden, deren Querschnitt zumindest im Ein- bzw. Ausgangsbereich des Mischerelementes rechteckförmig oder quadratisch ist, wobei eine Kantenlänge der Dicke des Mischerelementes entspricht. Für derartige Fasern ist der Packungsdichte-Verlust Null.

Bei der Kopplung zwischen der Lichtleitfaser und der Systemfaser tritt theoretisch kein Verlust mehr auf. Bei dieser Dimensionierung der Lichtleitfaser wird teilweise Licht aus dem Kern der Systemfaser in den Mantel der Lichtleitfaser eingekoppelt und dort geführt; der Anteil dieses Lichtes hängt von der Manteldicke ab. Da die Längen der Lichtleitfaser gering sind, ist der Verlust des im Mantel geführten Lichtes entsprechend klein; besonders wenn diese Lichtleitfasern in einem optischen Kleber geeignet niedrigen Brechungsindexes eingebettet sind.

In einer vorteilhaften Weiterführung der Erfindung ist vorgesehen, daß das Mischerelement an den Seiten, an denen keine Lichtleitfasern anstoßen, in ein Medium oder Material eingebettet ist, dessen Brechungsindex kleiner als der des Mischerelementes ist. Auf diese Weise können die Gesamtverluste des optischen Stern-Kopplers weiter gesenkt werden. Ein für diesen Zweck besonders geeignetes Medium sind optische Kleber. Vorteilhaft sind ebenso Luft und/oder Deckel/Substrat-Materialien. Eine weitere Alternative besteht darin, daß die Mischerelement-Oberflächen selbst als Mantelschichten mit kleinerem Brechungsindex ausgebildet sind. Werden Materialien mit gleichen thermischen Ausdehnungskoeffizienten verwendet, so werden möglicherweise Störungen oder Fehler hervorrufende Spannungen vermieden. Am wichtigsten ist, daß das Mischerplättchen unmittelbar umgebende Medium annähernd den gleichen thermischen Ausdehnungskoeffizienten hat wie dieses Mischerplättchen selbst.

Vorteilhafte Verfahren zur Herstellung eines in optischen Kleber eingebetteten Mischerelementes sind in weiteren Ansprüchen angegeben.

Es handelt sich dabei um einen Aufbau des Mischerelementes zwischen einem Substrat und einem Deckel. Wenn die Substrate für das Mischerelement und die an dieses Element anzuschließenden Lichtleitfasern die gleichen Dicken haben, ist beim Zusammenfügen auf einer gemeinsamen Platte auf einfache Weise ein Fluchten zwischen den Fasern und dem Mischerelement sichergestellt. Ein Höhenausgleich ist in diesem Fall unnötig.

Für ein Mischerelement aus Quarzglas mit einem Brechungsindex von ca. 1.45 ist vorteilhaft der Kleber LIR394 von Polytec mit einem Brechungsindex von 1,39 verwendbar.

Im folgenden werden anhand von zehn Figuren Ausführungsbeispiele des erfindungsgemäßen Stern-Kopplers sowie ein Verfahren zur Herstellung des im Kleber eingebetteten Mischerelementes näher beschrieben und erläutert. Dabei zeigt

Fig. 1 einen optischen Stern-Koppler in Draufsicht;

Fig. 2 in perspektivischer Darstellung ein mögliches Mischerelement;

Fig. 3 bis 8 verschiedene Verfahrensschritte zur Herstellung eines in optischen Kleber eingebetteten Mischerelementes;

Fig. 9 ein nach einem ähnlichen Verfahren hergestelltes Mischerelement;

Fig. 10 schließlich in einer Seitenansicht die Anordnung eines Mischerelementes und der daran anzukoppelnden Lichtleitfasern auf einer Seite, jeweils ohne Deckel.

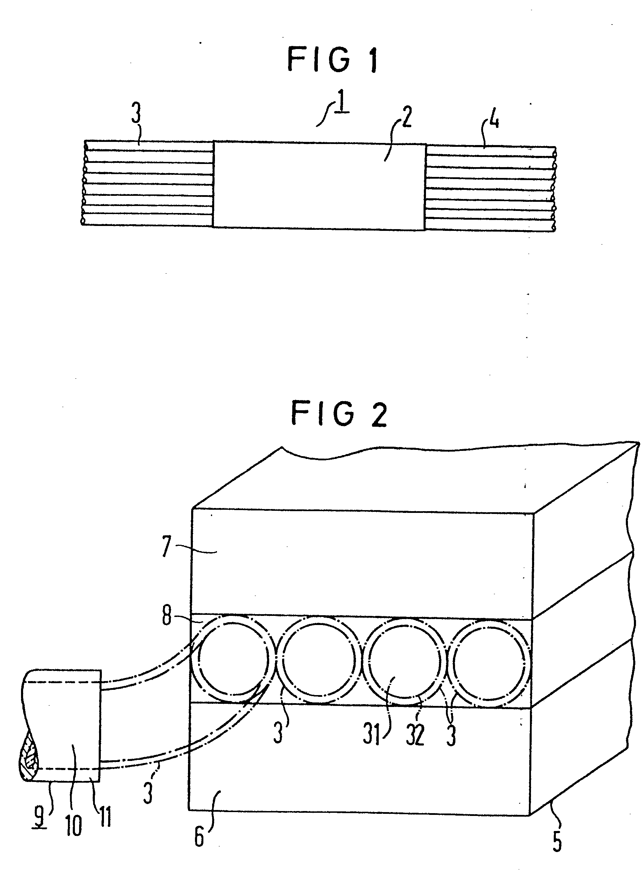

Die Fig. 1 zeigt einen optischen Stern-Koppler 1 mit einem planaren Lichtwellenleiter 2 als Mischerelement. An die Stirnflächen dieses planaren Lichtwellenleiters 2 stoßen eingangsseitig die Lichtwellenleiter 3 und ausgangsseitig die Lichtwellenleiter 4 an. Der Durchmesser der verwendeten Lichtleitfasern 3 bzw. 4 entspricht der Dicke des planaren Lichtwellenleiters 2. An die Lichtleitfasern 3 bzw. 4 werden im Bedarfsfall die Systemfasern angekoppelt.

Fig. 2 zeigt in perspektivischer Darstellung einen Ausschnitt aus einem möglichen Mischerelement 5, das aus einem zwischen einem Substrat 6 und einem Deckel 7 eingebetteten Mischerplättchen 8 aufgebaut ist. Zur Verdeutlichung sind auf die sichtbare Stirnfläche des Mischerplättchens 8 die anzukoppelnden Lichtleitfasern 3 mit ihren Kernflächen 31 und ihren dünnen Mantelflächen 32 gestrichelt eingezeichnet. Die in der Fig. 2 links dargestellte Lichtleitfaser ist an eine Systemfaser 9 herangeführt. Die Systemfaser 9 weist einen gestrichelt eingezeichneten Kernbereich 10 und einen daran anschließenden Mantelbereich 11 auf. Wie man dieser Darstellung entnehmen kann, entspricht der Außendurchmesser der an das Mischerelement 5 herangeführten Lichtleitfaser 3 dem Kerndurchmesser der Systemfaser 9.

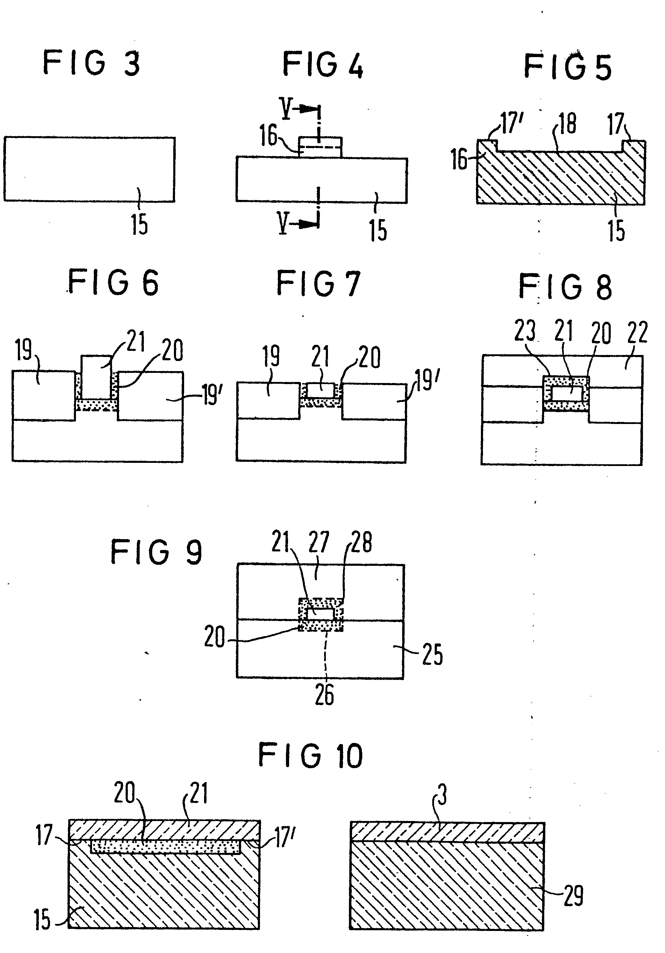

Fig. 3 zeigt das Ausgangssubstrat 15 für ein in optischen Kleber eingebettetes Mischerelement. Aus diesem Ausgangssubstrat 15 wird Material so gefräst, daß ein Mittensteg 16 stehenbleibt (Fig. 4). Die Breite dieses Mittensteges ist etwa 1 mm größer gewählt als die Breite des Mischerelementes.

Fig. 5 zeigt einen Schnitt entlang der Linie V-V in der Fig. 4. Wie man diesem Schnittbild entnehmen kann, weist der Mittensteg 16 seinerseits am Anfang und Ende einen Auflagesteg 17 bzw. 17' zur Auflage des Mischerelementes auf. Ansonsten ist er zu einer Wanne 18 vertieft. Im Bereich der Auflagestege 17, 17' hat das Substrat die Dicke des Ausgangssubstrates 15. Als Begrenzung für den optischen Kleber und später als große Auflagefläche bei einer einseitigen Oberflächenpolitur des Mischerplättchens werden auf die Substratoberfläche angrenzend an den Mittensteg 16 zwei Begrenzungsplättchen 19 bzw. 19' aufgeklebt (Fig. 6). Bei diesem Begrenzungsplättchen kann es sich z. B. um Glasplättchen handeln.

Anschließend wird der optische Kleber 20 eingefüllt und ein auf allen Seiten bis auf die Oberseite poliertes Mischerplättchen 21 eingelegt. Das Plättchen 21 ist von drei Seiten von optischem Kleber 20 umgeben. Es liegt dabei auf den Auflageflächen 17 bzw. 17' auf. Da die Länge der Auflagestege 17, 17' stets sehr klein gegen die Gesamtlänge des Mischerplättchens gewählt ist, ist immer gewährleistet, daß eventuell auftretende Verluste im Bereich dieser Stege 17, 17' immer vernachläßigt werden können.

Nach dem Aushärten des Klebers kann es vorteilhaft sein, die Auflagestege 17, 17' samt entsprechendem Plättchenstück und Substrat ganz oder teilweise wegzuschleifen. Anschließend wird das Plättchen 21 samt den seitlichen Begrenzungsplättchen 19 bzw. 19' auf die gewünschte Dicke des Mischerelementes geschliffen und poliert.

Fig. 7 zeigt den Zustand nach dem Schleifen und Polieren. Anhand der Fig. 8 ist das fertige Mischerelement dargestellt. Damit das Mischerplättchen 21 allseitig von Kleber umgeben ist, ist ein Deckel 22 aufgebracht, der an der Stelle des Mischerplättchens 21 eine Wanne 23 bildet, die ebenfalls mit optischem Kleber ausgefüllt ist. In einem letzten Verfahrensschritt werden die Stirnflächen des Mischerplättchens 21 poliert.

Soll statt eines hier beschriebenen Durchgangs-Mischerelementes ein Reflex-Mischerelement hergestellt werden, so ist in der fertigen Anordnung entsprechend der Fig. 8 eine Stirnfläche des Mischerplättchens 21 mit einer entsprechenden Spiegelschicht zu versehen.

Bei einer Herstellungsvariante können die seitlichen Begrenzungsplättchen auch direkt auf die Oberfläche des Ausgangssubstrates aufgebracht werden. Der Vorteil des Aufbringens nach dem Abtragen des Materials seitlich des Mittensteges 16 besteht darin, daß sich die Klebestellen für die Begrenzungsplättchen unterhalb der Oberfläche der Auflagestege 17 bzw. 17' befinden.

Die Herstellungsschritte für ein derartiges Mischerelement vereinfachen sich, wenn das Mischerplättchen von vornherein schon die geeignete Dicke hat und bis auf die Stirnflächen poliert ist. In diesem Fall reicht es aus, in das Ausgangssubstrat eine Wanne zu fräsen, die wieder etwas breiter ist als das Mischerplättchen, in der Länge jedoch etwas kürzer ist als die Länge des Mischerplättchens. Das in Längsrichtung dieser Wanne übrigbleibende Material des Ausgangssubstrates bildet die Auflagestege für das Mischerplättchen. Auf seitliche Begrenzungsplättchen kann verzichtet werden. In diesem Fall darf optischer Kleber auch auf die Substratoberfläche gelangen, da das Plättchen nicht mehr poliert werden muß, um die geeignete Plättchendicke zu erlangen.

Die übrigen Herstellungsschritte entsprechen denen anhand der Fig. 7 und 8 beschriebenen. Fig. 9 zeigt ein derart hergestelltes Mischerelement mit einem Substrat 25 mit einer Wanne 26, einem Deckel 27 mit einer Wanne 28 und dem eigentlichen Mischerplättchen 21.

Alle hier beschriebenen Verfahrensschritte sind auch für die gleichzeitige Herstellung mehrerer Mischerelemente geeignet. In diesem Fall sind auf einer Grundplatte entsprechend viele Gräben, Stege und eventuell seitliche Begrenzungsplättchen vorzusehen. Es können dann in jeweils einem Schleif- und/oder Polierprozeß entsprechende Oberflächen für gleichzeitig mehrere Mischerelemente bearbeitet werden.

Fig. 10 zeigt die gegenseitige Anordnung eines Mischerelementes ohne Deckel im Schnitt und die daran anzukoppelnden Lichtleitfasern ebenfalls im Schnitt ohne Deckel. Im linken Teil der Fig. 10 ist dabei wieder das Substrat 15 mit den beiden Auflagestegen 17 bzw. 17' dargestellt, auf dem das Mischerplättchen 21 aufliegt. Mit 20 ist wiederum der optische Kleber bezeichnet. Im rechten Teil der Figur sind auf einem gleich dicken Substrat 29 die Lichtleitfasern 3 angeordnet. Werden diese beiden Teile auf einer ebenen Unterlage gegeneinander geführt, so ist allein dadurch sichergestellt, daß das Mischerplättchen 21 und die Lichtleitfasern 3 fluchten.

Ein weiteres Verfahren sieht vor, daß ein Mischerplättchen der geforderten Dicke zwischen die ebenen Oberflächen eines Substrates und eines Deckels geklebt ist. Die so erzielte Lagegenauigkeit des Mischerplättchens reicht für viele Anwendungszwecke aus, wenn die Klebeschicht nur einige μm dick gemacht wird.

## Patentansprüche

1. Optischer Stern-Koppler für Multimode-Lichtleitfasern, bei dem zwei Bündel von Lichtleitfasern über ein aus einem planaren Wellenleiter bestehendes Mischerelement miteinander verbunden sind, dadurch gekennzeichnet, daß die Dicke des Mischerelementes (2) annähernd gleich der Faserabmessung in entsprechender Richtung ist und daß die am Ein- bzw. Ausgang dieses Mischerelementes (2) in derselben Ebene liegenden ankommenden und abgehenden Fasern (3, 4) derart angekoppelt sind, daß ihre Packungsdichte möglichst groß ist, und daß der Durchmesser der Lichtleitfasern (3, 4) annähernd gleich dem Kerndurchmesser (10) der mit dem Stern-Koppler (1) zu verbindenden Systemfaser (9) ist.

2. Stern-Koppler nach Anspruch 1, dadurch gekennzeichnet, daß die Querschnittsfläche der Lichtleitfasern (3, 4) zumindest im Ein- bzw. Ausgangsbereich des Mischerelementes (2) rechteckförmig ist, wobei eine Kantenlänge der Dicke des Mischerelementes (2) entspricht.

3. Stern-Koppler nach Anspruch 1, dadurch gekennzeichnet, daß das Mischerelement (2) an den Seiten, an denen keine Fasern anstoßen, in ein Medium eingebettet ist, dessen Brechungsindex kleiner als der des Mischerelementes (2) ist.

4. Stern-Koppler nach Anspruch 3, dadurch gekennzeichnet, daß Materialien, die im Stern-Koppler verwendet werden, annähernd den gleichen thermischen Ausdehnungskoeffizienten wie das Mischerelement (2) haben.

5. Stern-Koppler nach Anspruch 3 oder 4, dadurch gekennzeichnet, daß als Medium ein optischer Kleber (20) vorgesehen ist.

6. Verfahren zur Herstellung eines Mischerelementes nach Anspruch 5, gekennzeichnet durch die folgenden Verfahrensschritte:

a)  aus einem Ausgangssubstrat (15) wird eine Wanne (26) herausgefräst, deren Breite etwas größer als die Breite des plättchenförmigen Mischerelementes (Mischerplättchen) (21), deren Länge jedoch etwas kürzer als die Länge des Mischerplättchens (21) ist, so daß in Längsrichtung an beiden Enden ein Auflagesteg (17, 17') ausgebildet wird;

b)  die Wanne wird mit optischem Kleber (20) gefüllt und das Mischerplättchen (21) auf die Stege aufgesetzt;

c)  anschließend wird ein Deckel (27) mit einer das Mischerplättchen (21) aufnehmenden Wanne (28), die ebenfalls mit optischem Kleber (20) gefüllt wird, aufgesetzt.

7. Verfahren zur Herstellung eines Mischerelementes nach Anspruch 6, dadurch gekennzeichnet, daß die Auflagestege (17, 17') samt den entsprechenden Stücken des Mischerplättchens (21) ganz oder teilweise weggeschliffen werden.

8. Verfahren zur Herstellung eines Mischerelementes nach Anspruch 5, gekennzeichnet durch folgende Verfahrensschritte:

a)  aus einem Ausgangssubstrat (15) von etwa der Länge des plättchenförmigen Mischerelementes (Mischerplättchen) (21) wird Material gefräst, so daß ein Mittensteg (16) mit einem Graben (18) stehenbleibt, dessen Breite etwas größer als die Breite des Plättchens ist, dessen Länge jedoch etwas kürzer als die Länge des Plättchens (21) ist;

b)  auf die Substratoberflächen neben dem Mittensteg (16) werden Begrenzungsplättchen (19, 19') geklebt, deren Höhe größer als die Höhe des Mittensteges (16) ist;

c)  der Graben wird mit optischem Kleber (20) ausgefüllt und das Mischerplättchen (21), dessen Dicke größer ist als der Durchmesser der anzukoppelnden Lichtleitfasern, auf den Mittensteg (16) aufgesetzt;

d)  nach dem Aushärten des optischen Klebers (20) wird das Mischerplättchen (21) samt seitlichen Begrenzungsplättchen (19, 19') auf die Dicke der entsprechenden Lichtleitfasern geschliffen und poliert;

e)  es wird ein Deckel (22) mit einer in der Breite dem Graben entsprechenden Wanne (23) mit optischem Kleber ausgefüllt und aufgesetzt;

f)  abschließend werden die Stirnflächen des Mischerplättchens (21) poliert.

9. Verfahren zur Herstellung eines Mischerelementes nach Anspruch 6, dadurch gekennzeichnet, daß das Mischerplättchen (21), das Ausgangssubstrat (15) und der Deckel (22 bzw. 27) annähernd den gleichen thermischen Ausdehnungskoeffizienten haben.

## Claims

1. An optical star coupler for multimode light-conducting fibres, in which two bunches of light-conducting fibres are connected to one another by way of a mixer element in the form of a planar waveguide, characterized in that the thickness of the mixer element (2) is approximately equal to the fibre dimension in the corresponding direction, and that the incoming and outgoing fibres (3, 4) located at the input and output of this mixer element (2) in the same plane are coupled in such a way that their packing density is as high as possible; and that the diameter of the light-conducting fibres (3, 4) is approximately equal to the core diameter (10) of the system fibre (9) which is to be connected to the star coupler (1).

2. A star coupler according to claim 1, characterized in that the cross-sectional area of the light-conducting fibres (3, 4) is rectangular at least in the input and output regions of the mixer element (2), the length of an edge corresponding to the thickness of the mixer element (2).

3. A star coupler according to claim 1, characterized in that at its sides at which no fibres impinge, the mixer element (2) is embedded in a medium the refractive index of which is lower than that of the mixer element (2).

4. A star coupler according to claim 3, characterized in that materials used in the star coupler have approximately the same coefficient of thermal expansion as the mixer element (2).

5. A star coupler according to claim 3 or claim 4, characterized in that an optical adhesive (20) is provided as the medium.

6. A process for the production of a mixer element according to claim 5, characterized by the following process steps:

a)  in a starting substrate (15) there is milled out a trough (26) the width of which is somewhat greater than the width of the platelet-shaped mixer element (mixer platelet) (21) and the length of which is somewhat less than the length of the mixer platelet (21), so that a supporting bridge (17, 17') is formed at both ends in the longitudinal direction;

b)  the trough is filled with optical adhesive (20) and the mixer platelet (21) is placed on the bridges;

c)  finally, a cover (27) is put on, having a trough (28) which accommodates the mixer platelet (21) and is also filled with optical adhesive (20).

7. A process for the production of a mixer element according to claim 6, characterized in that the supporting bridges (17, 17'), together with the corresponding parts of the mixer platelet (21), are entirely or partially ground away.

8. A process for the production of a mixer element according to claim 5, characterized by the following process steps:

a) material is milled from a starting substrate (15) whose length is approximately equal to that of the platelet-shaped mixer element (mixer platelet) (21), so that a central bridge (16) remains having a trench (18) the width of which is somewhat greater han the width of the platelet, but whose length is somewhat less than that of the platelet (21);

b) boundary platelets (19, 19') the height of which is greater than the height of the central bridge (16) are stuck to the substrate surfaces beside the central bridge (16);

c) the trench is filled with optical adhesive (20), and the mixer platelet (21), the thickness of which is greater than the diameter of the light-conducting fibres which are to be coupled, is placed on the central bridge (16);

d) after the hardening of the optical adhesive (20), the mixer platelet (21), together with the lateral boundary platelets (19, 19') is ground to the thickness of the corresponding light-conducting fibres and is polished;

e) a cover (22) having a trough (23) the width of which corresponds to the trench is filled with optical adhesive and is placed in position;

f) finally, the end surfaces of the mixer platelet (21) are polished.

9. A process for the production of a mixer element according to claim 6, characterized in that the mixer platelet (21), the starting substrate (15) and the cover (22 and 27) have approximately the same coefficient of thermal expansion.

**Revendication**

1. Coupleur optique en étoile pour des fibres optiques multimodes, dans lequel deux faisceaux de fibres optiques sont reliés entre eux par l'intermédiaire d'un élément mélangeur constitué par un guide d'ondes planar, caractérisé par le fait que l'épaisseur de l'élément mélangeur (2) est approximativement égales à la dimension des fibres suivant la direction correspondante et que les fibres d'arrivée et de départ (3, 4) situées dans le même plan à l'entrée et à la sortie de cet élément mélangeur (2) sont couplées de telle sorte que leur densité d'intégration est aussi grande que possible, et que le diamètre des fibres optiques (3, 4) est approximativement égal au diamètre (10) du noyau de la fibre (9) du système, devant être reliée au coupleur en étoile (1).

2. Coupleur en étoile suivant la revendication 1, caractérisé par le fait que la surface en coupe transversale des fibres optiques (3, 4) est de forme rectangulaire au moins dans la zone d'entrée ou de sortie de l'élément mélangeur (2) auquel cas une longueur d'un côté correspond à l'épaisseur de l'élément mélangeur (2).

3. Coupleur en étoile suivant la revendication 1, caractérisé par le fait que l'élément mélangeur (2) est inséré, au niveau des faces contres lesquelles aucune fibre n'est en aboutement, dans un milieu dont l'indice de réfraction est inférieur à celui de l'élément mélangeur (2).

4. Coupleur en étoile suivant la revendication 3, caractérisé par le fait que les matériaux, qui sont utilisés dans le coupleur en étoile, possèdent approximativement le même coefficient de dilatation thermique que celui de l'élément mélangeur (2).

5. Coupleur en étoile suivant la revendication 3 ou 4, caractérisé par le fait qu'on prévoit comme milieu une colle optique (20).

6. Procédé pour fabriquer un élément mélangeur suivant la revendication 5, caractérisé par les phases opératoires suivantes:

a) a partir d'un substrat de départ (15) on aménage par fraisage une cuvette (26) dont la largeur est légèrement supérieure à la largeur de l'élément mélangeur en forme de plaquette (plaquette de mélangeur) (21), mais dont la longueur est légèrement inférieure à la longueur de la plaquette (21) du mélangeur de telle sorte qu'une barrette d'appui (17, 17') se trouve formée suivant la direction longitudinale au niveau des deux extrémités;

b) on remplit la cuvette avec une colle optique (20) et on dispose la plaquette (21) du mélangeur sur les barrettes;

c) on monte ensuite un couvercle (27) comportant une cuvette (28) recevant la plaquette (21) du mélangeur et que l'on remplit également d'une colle optique (20).

7. Procédé pour fabriquer un élément mélangeur suivant la revendication 6, caractérisé par le fait que les barrettes d'appui (17, 17') ainsi que les éléments correspondants de la plaquette (21) du mélangeur sont totalement ou partiellement éliminés par meulage.

8. Procédé pour fabriquer un élément mélangeur suivant la revendication 5, caractérisé par les phases opératoires suivantes:

a) a partir d'un substrat (15) possédant approximativement la longueur de l'élément mélangeur en forme de plaquette (plaquette du mélangeur) (21), on élimine de la matière par fraisage de manière à laisser subsister une barrette médiane (16) comportant un évidement (18) dont la largeur est légèrement supérieure à la largeur de la plaquette, mais dont la longueur est légèrement inférieure à la longueur de la plaquette (21);

b) sur les surfaces du substrat on colle, à côté de la barrette médiane (16), des plaquettes de limitation (19, 19') dont la hauteur est supérieure à la hauteur de la barrette médiane (16);

c) on remplit l'évidement avec une colle optique (20) et on appose la plaquette (21) du mélangeur, dont l'épaisseur est supérieure au diamètre des fibres optiques devant être accouplées, sur la barrette médiane (16);

d) après durcissement de la colle optique (20) on meule et on polit, jusqu'à l'épaisseur des fibres optiques corespondante, la plaquette (21) du mélangeur ainsi que les plaquettes de limitation latérales (19, 19');

e) on remplit avec une colle optique un couvercle (22) comportant une cuvette (23) correspondant à la largeur de l'évidement, et on le met en place,

f) enfin on polit les surfaces frontales de la plaquette (21) du mélangeur.

9. Procédé pour fabriquer un élément mélangeur suivant la revendication 6, caractérisé par le fait que la plaquette (21) du mélangeur, le substrat de départ (15) et le couvercle (22 ou 27) possèdent approximativement le même coefficient de dilatation thermique.

# FIG 1

# FIG 2

FIG 3

FIG 4

FIG 5

FIG 6

FIG 7

FIG 8

FIG 9

FIG 10